# DEMANDE DE BREVET EUROPEEN

(11) **EP 2 868 944 A1**
(43) Date de publication de la demande: **06.05.2015**
(21) Numéro de dépôt: 14190550.5
(22) Date de dépôt: 27.10.2014
(51) Int. Cl.: F16D 65/18, F16D 55/40

(54) **Actionneur de freinage pour frein hydraulique de roue d'aéronef.**

(30) Priorité: 04.11.2013 FR 1360799
(71) Demandeur: Messier-Bugatti-Dowty, 78140 Vélizy-Villacoublay (FR)
(72) Inventeur: Lucienne, Robin, 78140 VELIZY-VILLACOUBLAY (FR); Verdurmen, Christophe, 78140 VELIZY-VILLACOUBLAY (FR)
(74) Mandataire: Parzy, Benjamin Alain

(57) **Abrégé**

Un actionneur de freinage pour frein hydraulique d'aéronef, destiné à être rapporté dans l'une des cavités d'une couronne du frein, l'actionneur comprenant une chemise (1) adaptée à être reçue à étanchéité dans la cavité de la couronne, un piston (3) monté à coulissement étanche dans la chemise selon un axe de coulissement (X) pour appliquer un effort de freinage lors de l'introduction d'un fluide sous pression dans la cavité, un dispositif de rattrapage d'usure (10) qui définit une position de retrait du piston dans la chemise au moyen d' une butée mobile (11) pouvant être avancée par le piston lors de l'application d'un effort de freinage, un organe élastique (16) de rappel du piston vers la position de retrait prenant appui sur la butée mobile, le dispositif de rattrapage d'usure s'étendant entre la chemise et le piston, en aval d'un joint d'étanchéité s'étendant entre la chemise et le piston de façon à n'être pas baigné par le fluide dans la cavité, la butée étant arrêtée à friction sur la chemise.

## Description

L'invention concerne un actionneur de freinage pour frein hydraulique de roue d'aéronef.

### ARRIERE-PLAN TECHNOLOGIQUE DE L'INVENTION

Les freins hydrauliques utilisés pour freiner les roues des aéronefs comprennent généralement une couronne présentant des multiples cavités dans lesquels des actionneurs de freinage sont rapportés de manière amovible. Chacun des actionneurs comprend une chemise qui est rapportée à étanchéité dans l'une des cavités de la couronne et dans laquelle un piston est monté à coulissement étanche selon un axe de coulissement. La couronne distribue du fluide hydraulique sous pression à toutes ses cavités, fluide qui agit sur le piston pour le faire sortir et appliquer un effort de freinage sur des éléments de friction s'étendant en regard de la couronne, dont des rotors qui tournent avec la roue, et des stators qui sont immobiles en rotation.

Le piston présente en général une course opérationnelle qu'il parcourt lors de l'application d'un effort de freinage. Cette course opérationnelle, de l'ordre de quelques millimètres, est suffisante pour permettre l'application de l'effort de freinage sur les éléments de friction, et le recul du poussoir de façon à permettre la libre rotation des rotors. A cet effet, un ressort s'étendant à l'intérieur du piston assure le recul du poussoir jusqu'à une position de retrait lorsque l'effort de freinage n'est plus appliqué.

Cependant, les éléments de friction s'usant progressivement à la suite de l'application répétée d'efforts de freinage, il importe de faire en sorte que le piston se trouve toujours à proximité des éléments de friction. Pour ce faire, il est connu d'équiper les actionneurs de freinage d'un dispositif de rattrapage d'usure qui s'étend à l'intérieur du piston. Le dispositif de rattrapage d'usure comprend une butée mobile qui est montée coulissante avec friction selon l'axe de coulissement sur une tige centrale s'étendant dans le piston et qui définit la position de retrait du piston.

Lors de l'application d'un effort de freinage, le piston est poussé vers les éléments de friction et, le cas échéant, entraîne la butée mobile avec lui en vainquant la friction entre la tige et la butée, ce qui provoque l'avancement de la butée mobile sur la tige centrale. Lorsque l'effort est relâché, le ressort, qui s'étend entre la butée mobile et le piston, fait reculer le piston jusqu'à la nouvelle position de retrait, qui a avancé du fait de l'avancée de la butée mobile.

Il existe essentiellement deux technologies pour ce type d'actionneur de freinage. Dans l'une d'elles dite à piston humide, le fluide hydraulique est admis à l'intérieur du piston et baigne le système de rattrapage d'usure. Ces actionneurs sont simples, mais ont pour inconvénient que le fluide s'étend dans des zones proches de l'extrémité du piston qui est soumise à des températures élevées du fait de l'échauffement par frottement des éléments de friction du frein. Il en résulte une altération des caractéristiques physico-chimiques du fluide hydraulique, ce qui peut dégrader à terme les performances du freinage.

Dans l'autre des technologies dite à piston sec, un joint d'étanchéité est interposé entre le piston et la tige centrale, de sorte que le fluide reste confiné en arrière du piston et ne baigne plus le dispositif d'usure. Cependant, une telle technologie nécessite l'utilisation d'un joint supplémentaire qui pose d'autres problèmes d'usure en utilisation.

### OBJET DE L'INVENTION

L'invention a pour objet de proposer un actionneur de freinage pour frein hydraulique d'aéronef ne comportant pas les inconvénients précités.

### PRESENTATION DE L'INVENTION

En vue de la réalisation de ce but, on propose un actionneur de freinage pour frein hydraulique d'aéronef, destiné à être reçu dans l'une des cavités d'une couronne du frein, l'actionneur comprenant
- une chemise adaptée à être reçue à étanchéité dans la cavité de la couronne ;
- un piston monté à coulissement étanche dans la chemise selon un axe de coulissement pour appliquer un effort de freinage lors de l'introduction d'un fluide sous pression dans la cavité ;
- un dispositif de rattrapage d'usure qui définit une position de retrait du piston dans la chemise au moyen d' une butée mobile pouvant être avancée par le piston lors de l'application d'un effort de freinage ;
- un organe élastique de rappel du piston vers la position de retrait prenant appui sur la butée mobile ;
dans lequel, selon l'invention, le dispositif de rattrapage d'usure s'étend entre la chemise et le piston, la butée étant arrêtée à friction sur la chemise.

L'actionneur de l'invention ne comporte pas de tige centrale. Il est donc possible de fermer entièrement la partie proximale du piston pour empêcher le fluide de s'étendre à proximité de la partie distale du piston, tout en évitant l'utilisation d'un joint d'étanchéité. L'ensemble est donc bien plus simple mécaniquement, et évite l'utilisation d'un joint d'étanchéité supplémentaire.

### BREVE DESCRIPTION DES FIGURES

L'invention sera mieux comprise à la lumière de la description qui suit en référence aux figures des dessins annexés, parmi lesquelles :
- la figure 1 est une vue en coupe d'un actionneur de freinage selon l'invention illustré en place dans une couronne d'un frein hydraulique d'aéronef ;
- la figure 2 est une figure analogue à la figure 1, l'actionneur étant illustré lors de l'application d'un effort de freinage ;
- la figure 3 est une figure analogue à la figure 2, l'actionneur étant illustré après relâchement de l'effort de freinage.

### DESCRIPTION DETAILLEE DE L'INVENTION

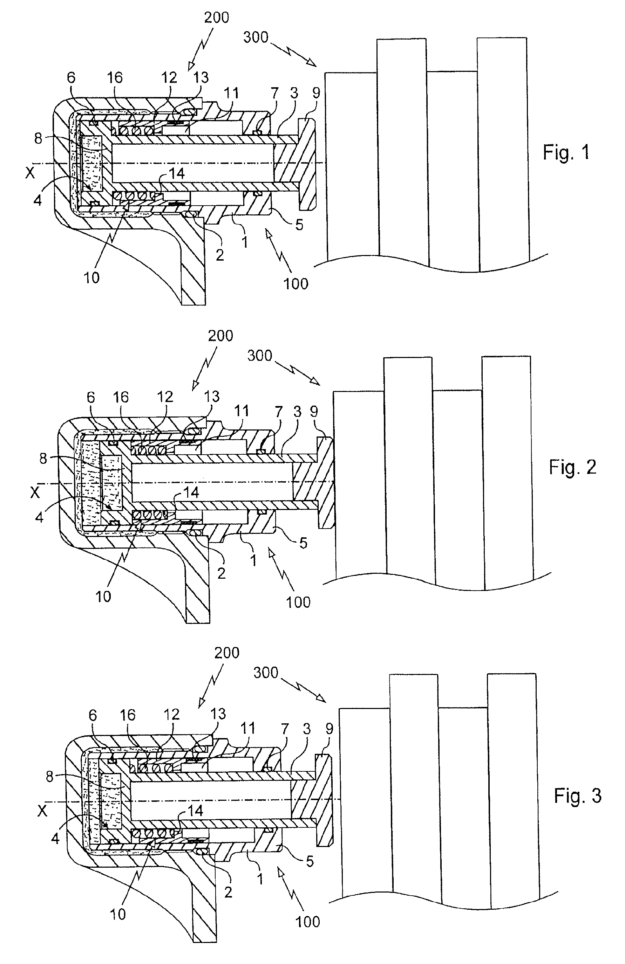

En référence à la figure 1, l'actionneur de freinage 100 de l'invention est destiné à être reçu dans l'une des cavités 200 d'une couronne d'un frein hydraulique d'aéronef, comportant par ailleurs des éléments de friction 300 comprenant une succession de disques rotors et de disques stators, par exemple des disques en carbone, sur lesquels l'actionneur exerce sélectivement un effort de freinage lors de l'admission de fluide sous pression (illustré par des points) dans la cavité 200.

L'actionneur 100 comporte tout d'abord une chemise 1 généralement cylindrique qui est reçue à étanchéité dans la cavité 200 de la couronne. A cet effet, un joint d'étanchéité 2 coopère avec une face externe de la chemise pour contenir le fluide hydraulique dans la cavité.

Un piston 3 est monté pour coulisser dans la chemise 1 selon un axe de coulissement X. A cet effet, l'extrémité proximale 4 du piston 3 est conformée en palier qui s'étend à ajustement contre une face interne de la chemise 1. L'extrémité distale 5 de la chemise 1 est conformée en palier pour guider le piston 3. L'extrémité proximale 4 du piston 1 est munie d'un joint d'étanchéité 6, tandis que l'extrémité distale 5 de la chemise 1 est munie d'un racleur 7.

On remarquera que l'extrémité proximale 4 du piston 3 est ici fermée par une paroi 8 venue de matière avec le piston, de sorte à confiner le fluide hydraulique dans une zone éloignée des disques 300. L'extrémité distale du piston 3 reçoit un patin 9 pour exercer un appui contre les disques 300.

L'actionneur 100 est muni d'un dispositif de rattrapage d'usure 10 qui, selon l'invention, s'étend entre la chemise 1 et le piston 3. Le dispositif de rattrapage d'usure 10 comprend une butée mobile 11 qui comporte une jupe 12 s'étendant à ajustement contre la face interne de la chemise 1. La jupe 12 comporte un évidement pour recevoir une bague de friction 13 portant contre la face interne de la chemise 11 pour permettre l'immobilisation à friction de la butée mobile 11 relativement à la chemise 1. La jupe 12 s'étend vers l'extrémité proximale 4 du piston 3 pour permettre au piston 1 de venir en appui contre la jupe 12 et donc d'emmener avec lui la butée mobile 11 à l'encontre de la friction générée par la bague de friction 13 lorsqu'un effort de freinage est appliqué. La butée mobile 11 comporte par ailleurs un mur 14 s'étendant radialement depuis la jupe 12 pour servir d'appui pour un ressort 16 qui s'étend entre ledit mur 14 et l'extrémité proximale 4 du piston 3 le long de la jupe 12 à l'intérieur de celle-ci pour rappeler le piston 3 vers une position de retrait, atteinte lorsque le ressort est relâché et finit de repousser le piston 3. On remarquera que le dispositif de rattrapage d'usure n'est pas baigné par le fluide hydraulique, puisqu'il s'étend en aval du joint d'étanchéité 6. Par ailleurs, il est protégé des pollutions extérieures par le racleur 7.

Le fonctionnement de l'actionneur de freinage de l'invention est le suivant. Partant de la position de retrait illustrée à la figure 1, on applique un effort de freinage en admettant du fluide sous pression dans la cavité 200. Le fluide repousse le piston 3 vers les disques 300. Si, avant de toucher les disques 300, le piston vient buter contre la jupe 12 de la butée mobile 11, celle-ci est avancée dans la chemise 1 par le piston 3 à l'encontre de la friction générée par la bague de friction 13, jusqu'à contact du piston 3 avec les disques 300, comme illustré à la figure 2.

Puis, quand l'effort de freinage est relâché, le piston revient sous l'effet du ressort 16, jusqu'à ce que le ressort 16 soit complètement relâché et ne puisse plus repousser le piston 3, définissant ainsi une nouvelle position de retrait, avancée par rapport à la précédente, comme illustré à la figure 3. La course opérationnelle du piston (entre la position de la figure 2 et la position de la figure 3) est inchangée, seule la position de retrait ayant légèrement avancé pour compenser l'usure des disques 300.

On remarquera que l'interface de la chemise avec la cavité de la couronne n'est absolument pas modifiée par les dispositions de l'invention. Il est donc possible d'organiser un remplacement d'actionneurs de freinage déjà en service par des actionneurs de freinage selon l'invention ayant exactement les mêmes interfaces extérieures.

L'invention n'est pas limitée à ce qui vient d'être décrit, mais englobe au contraire toute variante entrant dans le cadre défini par les revendications.

## Revendications

1. Actionneur de freinage pour frein hydraulique d'aéronef, destiné à être rapporté dans l'une des cavités d'une couronne du frein, l'actionneur comprenant
- une chemise (1) adaptée à être reçue à étanchéité dans la cavité de la couronne ;
- un piston (3) monté à coulissement étanche dans la chemise selon un axe de coulissement (X) pour appliquer un effort de freinage lors de l'introduction d'un fluide sous pression dans la cavité ;
- un dispositif de rattrapage d'usure (10) qui définit une position de retrait du piston dans la chemise au moyen d' une butée mobile (11) pouvant être avancée par le piston lors de l'application d'un effort de freinage;
- un organe élastique (16) de rappel du piston vers la position de retrait prenant appui sur la butée mobile ;
**caractérisé en ce que** le dispositif de rattrapage d'usure s'étend entre la chemise et le piston, en aval d'un joint d'étanchéité s'étendant entre la chemise et le piston de façon à n'être pas baigné par le fluide dans la cavité, la butée étant arrêtée à friction sur la chemise.

2. Actionneur de freinage selon la revendication 1, dans lequel la butée mobile comporte une jupe (12) qui s'étend contre une face interne de la chemise et qui présente une extrémité qui s'étend pour être repoussée par le piston lors de l'application d'un effort de freinage.

3. Actionneur selon la revendication 2, dans lequel la jupe (12) comporte un logement pour recevoir un organe de friction (13) qui coopère avec la face interne de la chemise pour immobiliser la butée relativement à la chemise.

4. Actionneur de freinage selon la revendication 2, dans lequel l'organe élastique est un ressort hélicoïdal (16) s'étendant à l'intérieur de la jupe le long de celle-ci.

5. Actionneur de freinage selon la revendication 1, dans lequel piston a une extrémité proximale (4) fermée et étanche au fluide.

6. Actionneur de freinage selon la revendication 1, dans lequel la chemise a une extrémité distale (5) qui définit un palier de guidage du piston et qui porte un racleur (7).
